## Europäisches Patentamt
## European Patent Office
## Office européen des brevets

(11) Publication number: **0 279 673**
**A2**

## (12) EUROPEAN PATENT APPLICATION

(21) Application number: **88301371.6**

(22) Date of filing: **18.02.88**

(51) Int. Cl.⁴: **C 04 B 35/10**
**C 04 B 35/80**

(30) Priority: **20.02.87 IT 1943187**

(43) Date of publication of application:
**24.08.88 Bulletin 88/34**

(84) Designated Contracting States: **DE FR GB NL SE**

(71) Applicant: **Keramont Research Corporation**
**4233 S. Fremont Avenue**
**Tucson Arizona 85714 (US)**

(72) Inventor: **Withers, James C.**
**720 N. Kolb Road**
**5 Tucson Arizona 85710 (US)**

**Loufty, Raouf O.**
**4660 N. Via Madre**
**Tucson Arizona 85749 (US)**

**Stuffle, Kevin L.**
**223 E. Southgate**
**Salt Lake City SLC UT 84115 (US)**

(74) Representative: **Whalley, Kevin et al**
**MARKS & CLERK 57/60 Lincoln's Inn Fields**
**London WC2A 3LS (GB)**

(54) **Composite powder of alpha-alumina, and process for preparing the same.**

(57) Composites having improved toughness based on a matrix of alpha-alumina, are prepared by a sol-gel process.

Binary composites comprise finely dispered zirconia, in tetragonal form, present in an amount from 2 to 30% by weight.

Ternary composites comprise the above zirconia and whiskers, filaments or fibres up to 30% by weight.

EP 0 279 673 A2

## Description

"COMPOSITE POWDER OF ALPHA-ALUMINA, AND PROCESS FOR PREPARING THE SAME"

The present invention relates to ceramic composites having high fracture toughness and high strength, based on an alumina matrix containing $ZRO_2$ particles with or without reinforcing fibers, filaments or whiskers. More particularly the present invention relates to composites in which the $ZrO_2$ particles and the fibers, filaments or whiskers, when present, are homogeneously dispersed in the matrix of $Al_2O_3$.

The potential in ceramic composites for superior engineering materials is attracting much attention worldwide. With the proper combination of ingredients, ceramic-ceramic composites hold promise for tough, strong materials without sacrifice in the advantages that ceramics have over metals and polymers.

In recent years there has been a tremendous amount of research performed to develop engineered ceramic composites. Two ceramic composites that are currently the focus of extensive investigation are:

1. Zirconia Toughened Alumina (ZTA); and
2. SiC-Whiskers reinforced Alumina (SWA).

Conventional processes for production of these ceramic composites consist of mixing powders and whiskers, filaments or fibres reinforcing agents followed by consolidation. One method has been to mix the dry composite constituents in their final states in either a ball-mill or attrition mill, then remove the product and consolidate it by hot-pressing or by cold pressing and sintering.

Another method has been to create a slurry by mixing the composite constituents in their final phases in a liquid usually containing a dispersant and/or binders with a high shear mixer and/or ultrasonic mixer, filter the slurry with a filter-press; dry the cake, and then consolidate the dried cake by hot-pressing or by cold-pressing and sintering.

Both of these techniques have two disadvantages: segregation and non-intimate contacting of composite constituents before consolidation. Intimate contacting prevents alignment of whiskers during uniaxial pressing.

Other known processes for the production of ZTA used in attempts to obtain a more homogeneous composite than is possi ble with conventional processing techniques include co-precipitation of zirconium and aluminum salts from aqueous solutions followed by calcination in oxidizing environment; another process consists in using simultaneous flame deposition zirconia and alumina. (See for example S. Hori, M, Yoshimura, S. Somiya, R. Kurita, and Kaji, "Mechanical Properties of $ZrO_2$-Toughened $Al_2O_3$ Ceramics from CVD Powders", J. Mater. Sci. Lett., 4, (1984), 413-416).

These known methods suffer the same disadvantages mentioned for the conventional mixed powder technique and are not compatible to the addition of whiskers for the production of a ternary composite.

It has long been known that zirconia, when present as a dispersed phase, can toughen alumina by two distinct mechanisms. One is by a stress induced martensitic phase transformation from the metastable phase (tetragonal) to the stable phase (monoclinic) that occurs in a zirconia particle in the strain field of a propagating crack tip. This phase transformation relieves stress. It is not clear whether the stress is relieved because energy is absorbed by activation energy of the phase transformation (nucleation barrier) or if it is the cancelation of tensional forces in a propagating crack tip by compressional forces exerted because of the dilation that occurs during the t-m phase change. The other mechanism by which zirconia can toughen alumina is by stress nucleated microcracking of the alumina matrix by monoclinic particles that have already been transformed from the tetragonal phase. This relieves stress by delocalizing the stress through local strain.

The metastability of t-$ZrO_2$ particles in ZTA and hence the degree of toughening via the stress induced t- to m- $ZrO_2$ phase transformation is a strong function of the microstructure of the composite. Nucleation barrier (a function of particle size, particle shape and matrix constraint) inhibits the transformation of a zirconia particle to its stable phase below the normal transformation temperature. (A. Heuer, N. Claussen, W. Kriven, and M. Ruhle, "Stability of Tetragonal Particles in Ceramics Matrices", 65 (12) 642-50 (1982)).

Zirconia particle size is a key parameter of the nucleation barrier. There exists a critical minimum particle diameter (about 50 nm) below which the stress induced phase transformation can not take place. Also, there exists a critical maximum particle diameter (0.6 microns) above which the particle will spontaneously transform to the stable phase (m) upon cooling to room temperature. Clearly the diameter of the zirconia particles must be between these two limits if transformation toughening is to be achieved. Larger particles transform more easily in a stress field than do smaller particles. However, the temperature at which the reverse transformation, m to t, takes place is a measure of the maximum temperature at which transformation toughening can occur; this temperature decreases with increasing particle size. Smaller zirconia particles give transformation toughening at higher temperatures than larger particles.

The use of whiskers or short fibers for reinforcement in composites has been under investigation for some time. Originally, fibers were used to reinforce glasses and metals (A. Direcha, S. Fishman and S. Karmakar, "Silicon Carbide Reinforced Alumina", J. Metals, p.112, September, (1981)).

As of late, whisker reinforcement of ceramic matrices has come into prominence. There is a large number of combinations of whiskers and matrices that could be created. Lately, use of strong, single crystal SiC-whiskers to reinforce alumina has been under intensive investigation. It has been determined that both fracture toughness and tensile strength of this composite (SWA) can be at least double of that of monolithic alumina (G. Wei and P. Betcher, "Development of SiC Whisker Reinforced Ceramics", Am. Ceram. Soc. Bull. 64 (2), 298-304 (1985)).

Excellent uniformity of composite constituents can be achieved with sol-gelling as a process for producing the matrix material because problems of segregation during processing are avoided. Also, non-alignment of whiskers can be achieved because of intimate contact of composite constituents before consolidation. However, the concept of using sol-gel has been discarded by most of the ceramic community because of poor results in earlier investigations. The problems experienced are high porosity and runaway grain growth during processing of sol-gel derived alumina to its alpha-phase (B. Kibbel and A. Heuer, "Exaggerated Grain Growth in Zirconia Toughened Alumina", J. Am. Cer. Soc., 69, 231 (1986)).

The scope of the present invention is to prepare composites consisting essentially of homogeneously dispersed $ZrO_2$ particles in $Al_2O_3$ matrix, derived from a sol-gel process, that exhibit enhanced strength and toughness.

A further scope is to prepare composites having the same properties above, further comprising homogeneously dispersed fibers, filaments or whiskers as reinforcing agents.

It has surprisingly been found that by using a particular sol-gel technique it is possible to prepare composites having superior fracture toughness and high strength.

Figure 1 - Photomicrograph of 15% $ZrO_2$, 15% SiC, 3% alpha-Alumina Seed Alumina Composite Gel. 600 x magnification.

Figure 2 - SEM Micrograph of 5% $ZrO_2$, 15% SiC, 3% Seed 1200°C Calcined Composite. 200 x magnification.

Figure 3 - SEM of fracture surface of binary (5% $ZrO_2$) composite (a) with, (b) without seed. 5000 x magnification.

The object of the present invention is a composite powder having improved toughness, consisting of alpha-alumina comprising:

a) finely dispersed zirconia present in an amount from 2 to 30 weight % and being in the tetragonal form; and

b) homogeneously dispersed whiskers, filaments or fibers in an amount from zero to 30 weight %.

More particularly, the composites of the present invention are binary composites alumina-zirconia having an amount of zirconia preferably from 4 to 16 weight %.

Also belonging to the present invention are alumina-zirconia-whiskers ternary composites, having an amount of whiskers, filaments or fibers from 5 to 20 weight %.

The zirconia comprised in the composites of the present invention has an average diameter comprised in a range which permits the zirconia to be in tetragonal form. As cited above, said diameter should not exceed 0.6 microns.

Particularly, the composites of the present invention are ternary composites wherein the whiskers are SiC whiskers having aspect ratio (length/diameter) from 10 to 200, average diameter from 0.05 to 0.7 microns and are present in an amount from 10 to 20 weight %.

Zirconia is used as a transformation and microcrack toughening material, while the whiskers, filaments and fibers are crack deflection toughening materials.

The whiskers or fibers which can be used for the present invention are all the reinforcing agents known in the art for the alumina toughening, for example those based on alumina, silicon nitride, boron nitride, aluminum nitride, silicon carbide and silica, preferably silicon nitride and silicon carbide.

High performance ceramic composites have a wide range of potential applications, such as cutting tools, wear parts, military and aerospace applications and heat engine parts. Such applications can materialize and new market opportunity can occur only if an economically formulated composite powder, a low cost method of consolidation, and good mechanical and thermal performance is achieved. With the binary and ternary composites of the present invention it is possible to produce new engineered ceramic powders with the right properties from simple low cost process steps.

Another object of the present invention are ceramic sin tered bodies, having improved toughness, prepared from the composite powders described above.

The binary composite powders of the present invention are prepared by a sol-gel comprising:

A) preparing an alumina gel, adding to said gel alpha-alumina seeds and a zirconium salt solution such to produce a gelled matrix and in an amount corresponding to the zirconia amount described above; and

B) drying the gelled matrix, then calcining the dried product at a temperature and for a time sufficient to transform the alumina to the alpha-phase and the zirconia to the tetragonal phase.

The term "alpha-seeds" here means submicronic alpha-alumina particles, generally having diameter from about 0.1 to 0.5 microns; this term is widely used in the art, as, for example, in M. Kumagai and G. Messing, "Controlled transformation and Sintering of a Bohemite Sol-Gel by alpha-alumina Seeding", J. Am. Ceram. Soc. 68(9), 500-505 (1985).

Generally, said alpha-seeds are used in an amount from about 1.5 to 4.0 weight percent, based upon the total weight of $Al_2O_3$.

According to the present invention and depending on the type of application of the composite powder, the alumina contained in the calcined product may not be all in the alpha-phase, but may contain a certain amount of theta-phase, provided that, anyway, it does not contain the gamma-phase.

According to the present invention one can also add at step A) of the above described process a dispersion of ultrafine zirconia particles, in tetragonal form in an amount from 2 to 20 weight%, preferably from 5 to 15% by weight. The use of said particles permit to obtain even better results in toughness and homogeneity of the final products.

Any zirconium salt can be used for preparing the zirconium solution mentioned above at step A), for example zirconium chloride, zirconium oxychloride, zirconium nitrate, zirconium perchlorate, preferably zirconium oxychloride.

The starting alumina gel can be prepared by any known method, for example from aluminum chloride hexahydrate (ACH), from aluminum monohydrate or from aluminum alkoxides.

It is preferred to prepare said gel by dispersing alumina monohydrate in diluted acidic solution at temperatures comprised between 40° and 80°C. Under these conditions excellent homogeneous gels are prepared which insure that the segregation of dispersed fibers, filaments or whiskers, zirconia particles or alpha-alumina seeds will not occur thus leading to a composite free from weakening heterogeneities.

One can carry out the drying of step B) of the above described process at temperature from about 80 to 200°C, preferably from 90 to 140°C, and for a time from 12 to 48 hours, both under vacuum or at atmospheric pressure.

The calcination of said step B) is carried out at temperature from about 1000 to 1300°C, preferably from 1050 to 1200°C, and for time from 10 to 200 minutes.

Preferably, the calcination is carried out in two steps. The first step consists in heating the dried powder at temperature from 700° to 900°C for time sufficient to drive off all the impurities, for example deriving from the anion of the zirconium salt. The second step is then the heating of the pre-calcined powder to the final desired temperature reported above.

Preferably, the first step is carried out at about 800°C and the second step at about 1200°C.

When one wants to prepare a ternary compound, fibers, filaments or whiskers dispersions can be added at step A) in such an amount corresponding to the desired amount in the final product; or the fibers, filaments or whiskers can be added to pre-calcined binary $Al_2O_3$-$ZrO_2$ composite prepared by the sol-gel process of the present invention, in a similar way used in the conventional processes for production of SWA.

The controlled microstructure of the matrix is obtained by controlling the nucleation frequency of the gel with seeds (submicronic alpha-alumina). Surprisingly it has been found that the use of alpha-seeds in the process of the present invention (alpha-seeding) has both the scope to lower the transformation temperature of the aluminum matrix to alpha-pha se and to enhance the growth of zirconia particles to the optimum size. This results in the product having very high toughness and strength.

Indeed, the critical fracture toughness data show that alpha-seeding has a very significant effect on enhancing the toughness of the composite. This is unexpected since it was generally known that $Al_2O_3$-$ZrO_2$-based composites produced from sol-gel would have low strength and low toughness. Accordingly, the effect of alpha-seeding is not only to control the phase transformation temperature but also to control the $ZrO_2$ particle size which is essential to optimize transformation toughening.

In all the reported examples the composite powders of the invention have been characterized as follows. Composite powders samples were hot pressed at 4000 psi at a temperature from 1670°C to 1690°C for a time from 7 to 10 minutes. The hot pressed samples were surface ground and sliced into 12 mm wide bars to serve as test samples for the mechanical testing.

The tests were carried out by the single edge notch beam technique; from those test results the critical fracture toughness ($K_{IC}$, $MPa.m^{1/2}$) has been calculated.

The above technique is described in L.A. Simpson, J. Amer. Ceram. Soc., Vol. 57, No. 4, 151-154, April 1974.

The following examples are given merely to illustrate the present invention and are not to be intended as a limitation thereof.

## Examples 1-4

### TERNARY COMPOSITES

Highly dispersed alumina monohydrate (>98% dispersibility) was prepared by dispersing Catapal® A alumina (Vista Chemical) in dilute acidic solution (hydrochloric acid was used at 70°C). The gel was obtained by increasing the acid concentration to 1.6 mmoles of H+ per gram of alumina.

SiC whiskers by Nissho Iwai American Corporation, of the type SCW-IS Tateho, having an aspect ratio (length/diameter) of 20-200 and diameter of 0.05-0.15 microns, were cleaned by leaching in 50% HCl solutions, and thoroughly rinsed. The whiskers were dispersed in water by adjusting at pH 6 followed by ultrasonic dispersion. A 20 weight % alpha-alumina sol, made by using CERALOX BM 86018 alpha-alumina having average diameter of 0.4 microns, was prepared at 70°C by adjusting the pH to 3.7 using nitric acid. The sol was allowed to fully disperse. The dispersed SiC whiskers were then added to the sol, and this mixture was added to the alumina gel prepared above, by using a top stirrer to homogenize the mass. Next a zirconium oxychloride solution was mixed in, which caused immediate gelling of the matrix. The SiC dispersion and the zirconium oxychloride solution were used in such an amount as to give the SiC and $ZrO_2$ amounts reported in Table 1.

The alpha-alumina sol was used in such an amount that the "alpha-seeds" were present in the amount reported in Table 1.

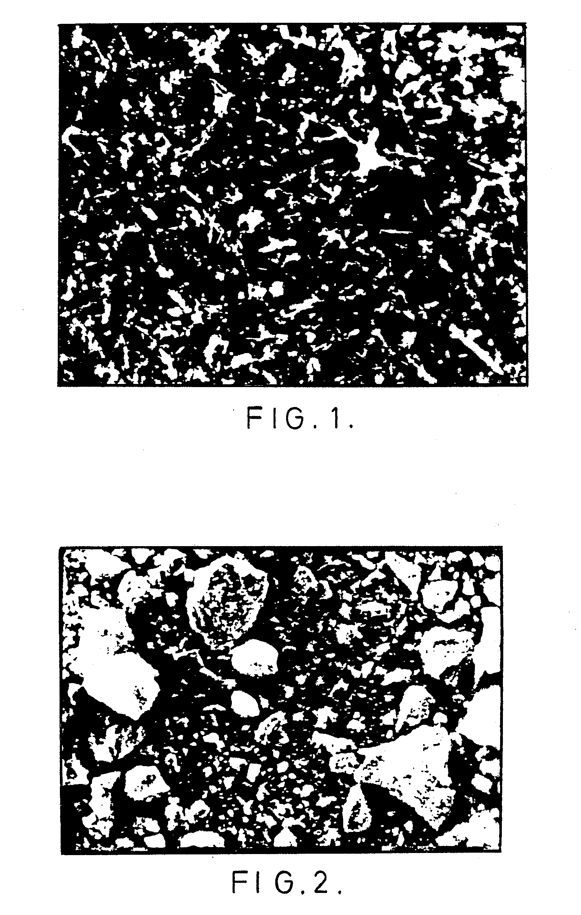

A photomicrograph of the gel produced containing the $ZrO_2$, SiC whiskers and alpha-$Al_2O_3$ seeds in alumina gel is shown in Figure 1. It is clear that the whiskers and alpha-alumina seeds are well dispersed with no agglomeration or clumping in gel matrix (which is translucent at this state).

The gel was dried at 125°C. The dried gel was ball milled, calcined at 800°C for two hours to drive off all the chlorides and finally calcined at 1200°C for two hours to transform the $ZrO_2$ to the tetragonal phase and the alumina matrix to alpha-alumina. In Figure 2 the SEM (scanning electron micrography) of calcined composite powder produced from gel is shown. It is clear that the SiC whiskers are homogeneously distributed and embedded into the matrix.

The hot pressed powder, tested as described above, gave a ceramic body having the fracture toughness $K_{IC}$ reported in Table 1.

## Examples 1A and 2A (comparative examples).

Composites powders having respectively the same amount of $ZrO_2$ and SiC whiskers as in Examples 1 and 2 have been prepared according to the known techniques by mechanically mixing powders of alpha-alumina, zirconia and SiC whiskers.

The fracture toughness of the resulting ceramic bodies are hot-pressing is reported in Table 1.

When comparing the $K_{IC}$ of composites produced from mixed powders approach with the $K_{IC}$ of the ternary composites produced by sol-gel with alpha-seeds, it is clear that the sol-gel with seeds approach results in tougher composites than mixed powder approach.

## Examples 5-6

### BINARY COMPOSITES

It was operated under the conditions and with the modalities described in Examples 1-4, but without using any whiskers dispersion.

The zirconium oxychloride solution was used in such an amount as to give the $ZrO_2$ amount reported in Table 2, and the alpha-alumina sol was used in such a way that the "alpha-seeds" were present in the amount reported in Table 2.

The hot pressed powder, tested as described in Examples 1-4, gave a ceramic body having the fracture toughness $K_{IC}$ reported in Table 2.

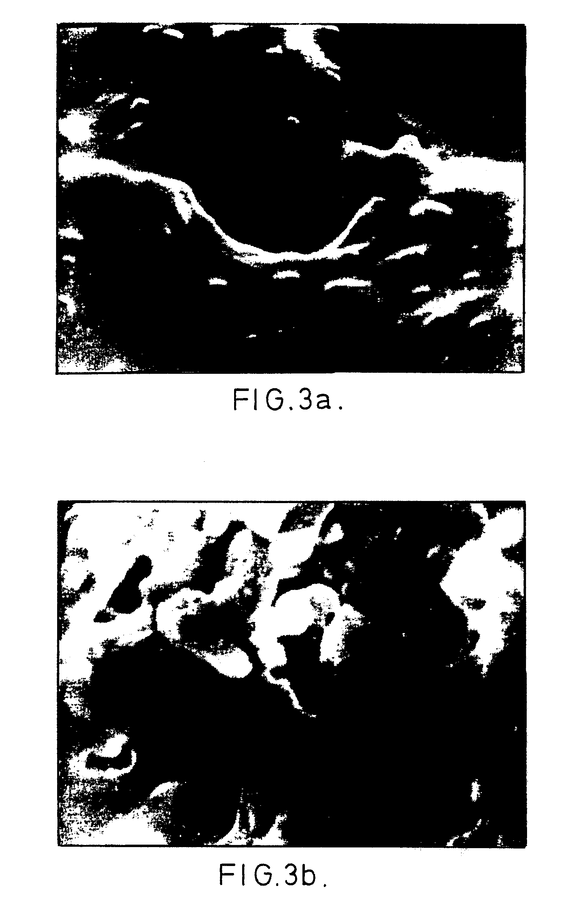

It is interesting to note the fine particulate $ZrO_2$ in the completely fund alumina matrix in Figure 3a, representing the SEM of fracture surface of the composite of Example 5. The fracture toughness of 7 MPam$^{1/2}$ for 5% $ZrO_2$ with alpha-alumina seeds is considered excellent for binary $ZrO_2$ composites.

## Example 5A (comparative example).

A composite powder having the same amount of $ZrO_2$ as in Example 5 has been prepared according to the known techniques by mechanically mixing powders of alumina and zirconia.

The fracture toughness of the resulting ceramic body after hot-pressing is reported in Table 2.

## Example 5B (comparative example).

Example 5 was repeated; the composite powder was prepared by the same sol-gel process but without using alpha-alumina seeds.

The fracture toughness $K_{IC}$ of the resulting ceramic body after hot-pressing is reported in Table 2.

Figure 3b represents the SEM of fracture surface of the composite of example 5B. From the comparison with Figure 3a and of the $K_{IC}$ values it is clear that the alpha-alumina seeds had a significant effect on the sintering of this binary composite.

## Table 1

| Example | % ZrO$_2$ | % SiC | % $\alpha$-seeds | K$_{IC}$,(MPa.m$^{\frac{1}{2}}$) |
|---------|-----------|-------|------------------|----------------------------------|
| 1 | 5 | 15 | 4 | 9.40 |
| 1A (comp.) | 5 | 15 | - | 7.60 |
| 2 | 5 | 30 | 4 | 9.87 |
| 2A (comp.) | 5 | 30 | - | 8.0 |
| 3 | 15 | 15 | 4 | 9.33 |
| 4 | 15 | 30 | 4 | 10.06 |

## Table 2

| Example | % ZrO$_2$ | % SiC | % $\alpha$-seeds | K$_{IC}$,(MPa.m$^{\frac{1}{2}}$) |
|---------|-----------|-------|------------------|----------------------------------|
| 5 | 5 | 0 | 3 | 7.09 |
| 5A (comp.) | 5 | 0 | - | 4.30 |
| 5B (comp.) | 5 | 0 | 0 | 3.17 |
| 6 | 15 | 0 | 3 | 6.07 |

## Claims

1. A composite powder of alpha-alumina, characterized by comprising:

    a) finely dispersed zirconia present in an amount from 2 to 30 weight % and being in the tetragonal form; and

    b) homogeneously dispersed whiskers, filaments or fibers in an amount from zero to 30 weight %.

2. A composite powder as claimed in claim 1, characterized in that the amount of zirconia is from 4 to 16 weight %, said composite being a binary composite.

3. A composite powder as claimed in claim 1, characterized in that the amount of whiskers, filaments or fibres is from 5 to 20 weight %, said composite being a ternary composite.

4. A composite powder as claimed in any of claims 1 to 3, characterized in that the fibres, filaments or whiskers are selected from those based on $Al_2O_3$, $Si_3N_4$, BN, AlN, SiC, and $SiO_2$.

5. A composite powder as claimed in any of claims 1 to 4, characterized in that the whiskers are SiC whiskers having aspect ratio (length/diameter) from 10 to 200 and an average diameter from 0.05 to 0.7 microns and are present in an amount from 10 to 20 weight %.

6. A sol-gel process for preparing the composite powder of claim 1, characterized by comprising:

    A) preparing an alumina gel, adding to said gel alpha-alumina seeds and a zirconium salt solution such to produce a gelled matrix and in an amount corresponding to the zirconia amount of claim 1; and

    B) drying the gelled matrix, then calcining the dried product at a temperature and for a time sufficient to transform the alumina to the alpha-phase and the zirconia to the tetragonal phase.

7. A process as claimed in claim 6, characterized by adding at point A) a fibres, filaments or whiskers dispersion in an amount corresponding to the fibres, filaments or whiskers amount of claim 1.

8. A process as claimed in claim 6 or 7, characterized in that the alpha-alumina seeds have an average diameter from 0.1 to 0.5 microns and are present in an amount from 1.5 to 4.0 weight percent.

9. Ceramic sintered bodies, characterized by being prepared from the composite powder as claimed in any of claims 1 to 5.

10. A composite powder according to claim 1, characterized by being prepared by a sol-gel process as claimed in any of claims 6 to 8.

0279673

FIG.1.

FIG.2.

FIG.3a.

FIG.3b.